# FASCICULE DE BREVET EUROPEEN

(11) **EP 4 168 883 B1**
(45) Date de publication et mention de la délivrance du brevet: **09.10.2024**
(21) Numéro de dépôt: 21742163.5
(22) Date de dépôt: 17.06.2021
(51) Int. Cl.: G06F 3/01, G02B 27/00, G02B 27/01

(54) **PROCÉDÉ, DISPOSITIF ET SYSTÈME D'IMMERSION D'UN UTILISATEUR DANS UNE APPLICATION DE RÉALITE VIRTUELLE**
VERFAHREN, VORRICHTUNG UND SYSTEM ZUM EINTAUCHEN EINES BENUTZERS IN EINE ANWENDUNG DER VIRTUELLEN REALITÄT
METHOD, DEVICE AND SYSTEM FOR IMMERSING A USER IN A VIRTUAL REALITY APPLICATION

(30) Priorité: 19.06.2020 FR 2006418
(43) Date de publication de la demande: 26.04.2023
(73) Titulaire: Orange, 92130 Issy-les-Moulineaux (FR)
(72) Inventeur: GUIGNON, Richard, 92326 CHÂTILLON CEDEX (FR); POIVRE, Sébastien, 92326 CHÂTILLON CEDEX (FR); BELAY, Gildas, 92326 CHÂTILLON CEDEX (FR)
(74) Mandataire: Cabinet Beau de Loménie
(86) Numéro de dépôt international: PCT/FR2021/051097
(87) Numéro de publication internationale: WO 2021/255395

(56) Documents cités:
- US-A1- 2014 361 976
- US-A1- 2018 004 286
- US-A1- 2019 385 372

## Description

Titre de l'invention : Procédé, dispositif et système d'immersion d'un utilisateur dans une application de réalité virtuelle

### Technique antérieure

La présente invention se situe dans le domaine de la réalité virtuelle.

Les technologies de réalité virtuelle permettent à un utilisateur d'interagir avec un environnement simulé par ordinateur (scène synthétique). Elles sont utilisées dans des applications très variées et le marché des casques de réalité virtuelle est en forte croissance.

Malheureusement, certaines personnes peuvent éprouver des malaises lors de l'utilisation de casques de réalité virtuelle. En particulier, certaines personnes peuvent ressentir le symptôme de la cinétose, (ou mal des transports) susceptible de se produire lorsqu'il existe un décalage ou latence entre les mouvements de tête et l'affichage des images sur le casque de réalité virtuelle.

Des solutions ont été envisagées pour détecter et réagir aux déplacements de la tête de l'utilisateur mais elles ne sont pas satisfaisantes.

L'invention vise un procédé d'immersion permettant d'atténuer ce problème.

Le document US 2014/361976 A1 décrit un système pour gérer l'affichage d'images sur un casque de réalité virtuelle dans lequel il est détecté que le regard de l'utilisateur est fixé sur une zone prédéterminée pendant une durée prédéterminée, le système masquant, en réponse à la détection, une région de l'affichage dans le casque, tout en maintenant la scène du monde virtuel dans une zone de l'affichage à l'extérieur de la région.

Le document US 2018/004286 A1 décrit un procédé pour augmenter une scène de réalité virtuelle avec un contenu du monde réel. Ce procédé comprend une opération pour obtenir des données de capteur à partir d'un casque de réalité virtuelle pour déterminer si un ou plusieurs objets du monde réel peuvent être superposés dans la scène de réalité virtuelle pour fournir une scène de réalité virtuelle augmentée.

Le document US 2019/385372 A1 décrit un procédé de réalité augmentée dans lequel un environnement physique est présenté dans un environnement virtuel.

### Exposé de l'invention

Plus précisément, l'invention concerne un procédé d'immersion d'un utilisateur dans une application de réalité virtuelle, ce procédé étant tel que défini par la revendication 1.

Corrélativement, l'invention concerne un dispositif d'immersion d'un utilisateur dans une application de réalité virtuelle, ce dispositif étant tel que défini par la revendication 6.

En particulier, la scène synthétique comporte l'objet synthétique dont le volume est apte à être compris dans un volume dans lequel un système d'acquisition vidéo est susceptible de se déplacer, ledit objet synthétique étant associé préalablement à l'immersion au volume de déplacement du système d'acquisition vidéo.

Ainsi, et de façon remarquable, l'invention propose non seulement de contrôler les déplacements d'un système d'acquisition vidéo (par exemple) en fonction des déplacements de la tête de l'utilisateur mais aussi de contrôler le positionnement de la caméra lors de la prise en main à distance pour accentuer la limitation des problèmes de cinétose et de parallaxe liés au fait que les mouvements dans le monde captés reproduits sur l'écran ne sont pas cohérents avec les mouvements de l'utilisateur et l'inconfort ressenti par l'utilisateur lorsque la course du système d'acquisition est bloquée (la caméra ne pouvant pas aller plus loin, par exemple bout de bras lorsque la caméra est fixée sur un bras automatisé).

Le système d'acquisition vidéo est par exemple une caméra à 360° positionnée sur un bras articulé et bénéficiant ainsi de 6 degrés de liberté.

Différentes solutions peuvent être utilisées pour détecter en temps réel la position et l'orientation de la tête d'un utilisateur. On connaît en particulier des casques de réalité virtuelle aptes à positionner la tête de l'utilisateur dans l'espace soit avec des capteurs externes au casque soit avec des caméras intégrées au casque et qui filment l'environnement pour déterminer la position du casque.

Le système de détection de la position de la tête de l'utilisateur et le dispositif de déplacement du système d'acquisition vidéo peuvent être interconnectés par un réseau haute performance de type 5G à très faible latence et très haut débit afin de transmettre le flux vidéo et les commandes des déplacements du bras articulé en temps réel.

Le dispositif d'immersion selon l'invention récupère en temps réel la position de la tête de l'utilisateur et envoie les commandes de déplacement de la caméra dont le flux vidéo est renvoyé au casque de réalité virtuelle. Ce mécanisme évite la cinétose.

De façon très avantageuse, le flux vidéo acquis par le dispositif d'acquisition n'est restitué sur un écran d'un casque de réalité virtuelle de l'utilisateur que lorsque les yeux d'un avatar de l'utilisateur se trouvent dans un objet synthétique dont le volume peut être compris dans un volume dans lequel le système d'acquisition vidéo est susceptible de se déplacer.

Cette caractéristique permet d'améliorer grandement l'expérience de l'utilisateur puisque si les déplacements de l'utilisateur ont pour conséquence de commander le déplacement du dispositif d'acquisition dans une position qu'elle ne peut pas occuper dans le monde réel, on cesse de restituer le contenu vidéo à l'utilisateur.

Dans un mode particulier de réalisation, le contenu restitué sur l'écran du casque de réalité virtuelle est la scène synthétique si la position des yeux de l'avatar est en dehors de l'objet synthétique. L'utilisateur est ainsi immergé dans un monde virtuel qui lui permet de prendre le contrôle du dispositif d'acquisition dès lors que les yeux de son avatar franchissent les limites de l'objet virtuel. Dans un mode particulier de réalisation, le contenu restitué est un contenu de transition entre le flux vidéo acquis par ledit système et la scène synthétique si la position des yeux de l'avatar est proche de la limite de l'objet synthétique.

Ce contenu de transition est par exemple une image synthétique de la couleur de l'objet synthétique. En variante, le contenu de transition est un fondu entre le flux vidéo acquis par le système d'acquisition vidéo et la scène synthétique.

L'invention vise aussi un système comportant des capteurs pour détecter les déplacements de la tête d'un utilisateur, un système d'acquisition vidéo, un casque de réalité virtuelle et un dispositif d'immersion tel que décrit ci-dessus, ce dispositif étant configuré pour contrôler les déplacements du système d'acquisition vidéo et pour restituer un contenu sur un écran du casque de réalité virtuelle, ce contenu étant un flux vidéo acquis par ledit système d'acquisition vidéo si la position des yeux d'un avatar de l'utilisateur contrôlé par ledit dispositif est dans un objet synthétique dont le volume peut être compris dans un volume dans lequel le système d'acquisition vidéo est susceptible de se déplacer.

Dans un mode de réalisation, le système d'acquisition vidéo comporte deux caméras. Un moteur peut permettre de gérer l'écartement entre les caméras en fonction de l'écartement entre les pupilles. Si le casque de réalité virtuelle est apte à suivre le regard de l'utilisateur, le point de focus de chaque caméra peut être varié.

L'invention vise également un programme d'ordinateur sur un support d'enregistrement, ce programme étant susceptible d'être mis en oeuvre dans un dispositif ou plus généralement dans un ordinateur. Ce programme comporte des instructions permettant la mise en oeuvre d'un procédé d'immersion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1A] la figure 1A représente un système d'immersion conforme à l'invention dans son environnement ;
[Fig. 1B] la figure 1B représente un système d'acquisition vidéo pouvant être utilisé dans un mode de réalisation de l' l'invention ;
[Fig. 2] la figure 2 représente un exemple de scène synthétique ;
[Fig. 3] la figure 3 représente un utilisateur de l'invention dans son environnement ;
[Fig. 4] la figure 4 représente sous forme d'ordinogramme les principales étapes de gestion d'un procédé d'immersion conforme à un mode de réalisation de l'invention ;
[Fig. 5] la figure 5 représente un contenu projeté sur un écran d'un casque de réalité virtuel de l'utilisateur de la figure 4 ;
[Fig. 6A] la figure 6A représente un avatar de l'utilisateur de la figure 4 lorsqu'il entre dans un volume virtuel de la scène synthétique de la figure 2 ;
[Fig. 6B] la figure 6B représente la position du système d'acquisition de la figure 1B dans ces conditions ;
[Fig. 6C] la figure 6C représente le système d'acquisition de la figure 6B en détails;
[Fig. 6D] la figure 6D représente le contenu projeté sur l'écran d'un casque de réalité virtuel de l'utilisateur de la figure 4 dans ces conditions ;
[Fig. 7A] la figure 7A représente l'avatar de l'utilisateur de la figure 4 dans une première position et une première orientation dans le volume virtuel de la scène synthétique de la figure 2 ;
[Fig. 7B] la figure 7B représente la position du système d'acquisition de la figure 1B dans ces conditions ;
[Fig. 7C] la figure 7C représente le système d'acquisition de la figure 7B en détails;
[Fig. 7D] la figure 7D représente le contenu projeté sur l'écran d'un casque de réalité virtuel de l'utilisateur de la figure 4 dans ces conditions ;
[Fig. 8A] la figure 8A représente l'avatar de l'utilisateur de la figure 4 dans une deuxième orientation dans le volume virtuel de la scène synthétique de la figure 2 ;
[Fig. 8B] la figure 8B représente la position du système d'acquisition de la figure 1B dans ces conditions ;
[Fig. 8C] la figure 8C représente le système d'acquisition de la figure 8B en détails;
[Fig. 8D] la figure 8D représente le contenu projeté sur l'écran d'un casque de réalité virtuel de l'utilisateur de la figure 4 dans ces conditions ;
[Fig. 9A] la figure 9A représente l'avatar de l'utilisateur de la figure 4 lorsqu'il sort du volume virtuel de la scène synthétique de la figure 2 ;
[Fig. 9B] la figure 9B représente la position du système d'acquisition de la figure 1B dans ces conditions ;
[Fig. 9C] la figure 9C représente le système d'acquisition de la figure 9B en détails;
[Fig. 9D] la figure 9D représente le contenu projeté sur l'écran d'un casque de réalité virtuel de l'utilisateur de la figure 4 dans ces conditions ;
[Fig. 10A] la figure 10A représente l'avatar de l'utilisateur de la figure 4 en dehors du volume virtuel de la scène synthétique de la figure 2 ;
[Fig. 10B] la figure 10 représente la position du système d'acquisition de la figure 1B dans ces conditions ;
[Fig. 10C] la figure 10C représente le système d'acquisition de la figure 10B en détails;
[Fig. 10D] la figure 10D représente le contenu projeté sur l'écran d'un casque de réalité virtuel de l'utilisateur de la figure 4 dans ces conditions ;
[Fig. 11] la figure 11 représente l'architecture fonctionnelle d'un dispositif d'immersion conforme à un mode de réalisation de l'invention ; et
[Fig. 12] la figure 12 représente l'architecture matérielle d'un dispositif d'immersion conforme à un mode de réalisation de l'invention.

### Description détaillée de modes de réalisation particuliers

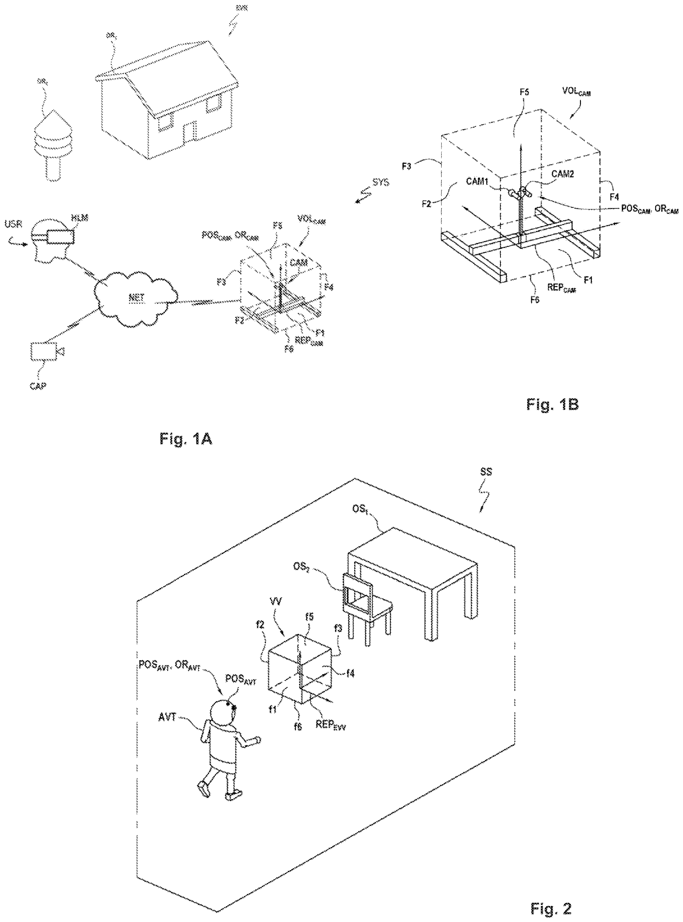

La **figure 1A** représente un système SYS conforme à un mode particulier de réalisation de l'invention. Ce système SYS comporte un système d'acquisition vidéo CAM pouvant se déplacer grâce à un bras articulé robotisé dans un VOL_{CAM} dans un environnement réel EVR. Ce bras permet par exemple un déplacement et une rotation du système d'acquisition selon six degrés de liberté. Dans l'exemple de la figure 1A, l'environnement réel comporte deux objets réels : un arbre OR₁ et une maison OR₂.

On note REP_{CAM} un repère lié à au système d'acquisition vidéo.

Dans un mode de réalisation représenté à la **figure 1B****,** le système d'acquisition vidéo CAM comporte deux caméras CAM₁ et CAM₂. Un moteur peut permettre de gérer l'écartement entre les caméras en fonction de l'écartement entre les pupilles.

Ce système CAM peut être piloté à distance via un réseau NET pour suivre les mouvements de la tête d'un utilisateur USR. Ce réseau est par exemple un réseau haute performance de type 5G à très faible latence et très haut débit permettant la transmission des flux vidéo la commande des mouvements du bras articulé en temps réel.

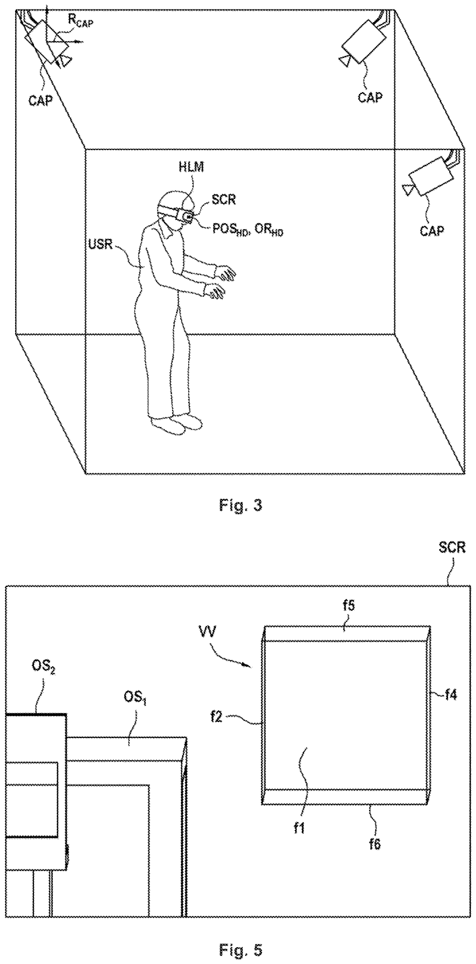

A cet effet, et comme représenté à la **figure 3****,** l'utilisateur USR est équipé d'un casque de réalité virtuelle HLM dont la position POS_{HD} et l'orientation OR_{HD} peuvent être déterminées par un réseau de capteurs CAP, dans un repère REP_{CAP} lié à ce réseau de capteurs.

Si le casque de réalité virtuelle HLM est apte à suivre le regard de l'utilisateur, le point de focus de chaque caméra CAM₁, CAM₂ peut être varié.

La **figure 2** représente une scène synthétique SS comportant des objets synthétiques W et OSᵢ. L'un de ces objets synthétiques, W est un volume fini virtuel. Dans la suite on ne s'intéresse qu'à cet objet synthétique (ou objet virtuel) W.

Un avatar AVT de l'utilisateur USR peut se déplacer dans la scène synthétique SS.

Dans le mode de réalisation décrit ici en référence aux figures 1 et 2, les volumes VOL_{CAM} et W ont une même forme sensiblement cubique.

Ces volumes pourraient avoir une autre même forme par exemple sphérique ou ovoïde.

Ces volumes peuvent aussi être de formes différentes. Par exemple, le volume VOL_{CAM} de déplacement du système d'acquisition vidéo peut être parallélépipédique et le volume virtuel W peut être sphérique.

Le volume de l'objet synthétique W peut être compris dans le volume VOL_{CAM} dans lequel ledit système d'acquisition vidéo CAM est susceptible de se déplacer.

Les dimensions du volume virtuel VV sont légèrement inférieures à celles du volume VOL_{CAM} dans lequel le système d'acquisition vidéo CAM peut se déplacer. Le volume virtuel W peut être inscrit dans le volume VOL_{CAM}. Cette caractéristique permet aussi d'éviter que le bras robotisé soit en butée lorsque les yeux de l'avatar AVT arrivent en limite du volume virtuel W.

On note respectivement POS_{AVT} et OR_{AVT} la position et l'orientation des yeux de l'avatar AVT dans un repère REP_{EVV} lié au volume virtuel.

Le repère REP_{CAM} lié au système d'acquisition vidéo et le repère REP_{EVV} lié au volume virtuel W sont mis en correspondance de sorte à ce que tout point du volume virtuel W correspond à un point du volume VOL_{CAM} de déplacement du système d'acquisition CAM.

Dans cet exemple, on note Fᵢ les faces du volume VOL_{CAM} et fᵢ les faces correspondantes du volume VV.

De la même façon, le repère REP_{EVV} lié au volume virtuel W et le repère REP_{CAP} lié au réseau de capteurs CAP sont mis en correspondance.

Ainsi, l'objet synthétique VV permet de matérialiser le volume couvert par le déplacement de système d'acquisition et d'y associer des étapes de début et fin de transmission rendant la transmission plus naturelle, plus confortable pour l'utilisateur qui sort de l'objet synthétique lorsque le système d'acquisition arrive à la limite de son volume de déplacement mettant ainsi fin à la transmission de la vidéo fournie par le système d'acquisition.

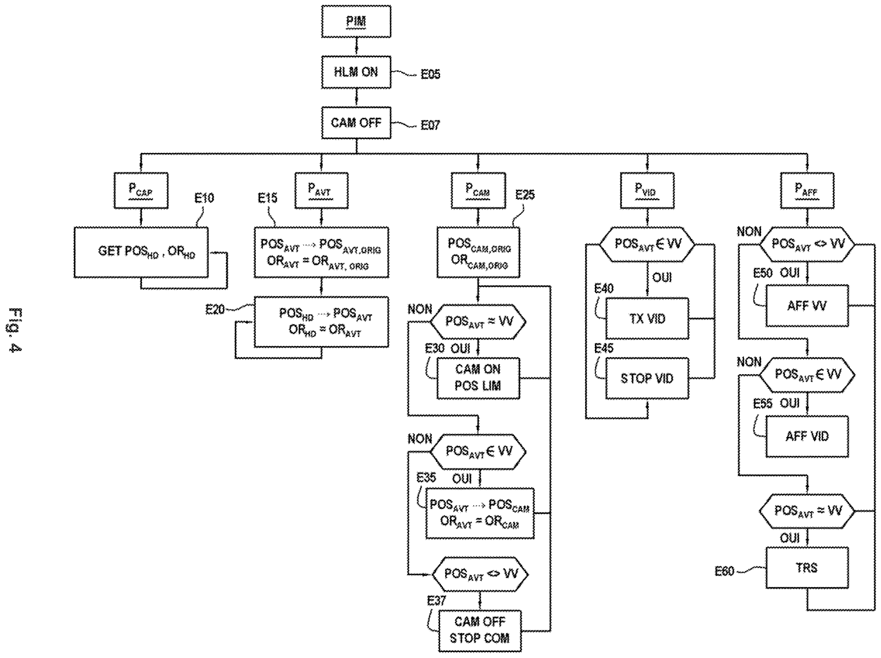

La **figure 4** représente les principales étapes d'un procédé d'immersion P_{IMM} conforme à un mode particulier de réalisation de l'invention.

On supposera que l'utilisateur allume son casque de réalité virtuelle au cours d'une étape E05.

La scène synthétique SS de la figure 2 est projetée sur un écran SCR de casque HLM. Le contenu qui apparaît sur cet écran est représenté à la figure 5. On reconnait le volume virtuel W et des portions des objets synthétiques OS₁ et OS₂.

Le système d'acquisition vidéo CAM est éteint, sa position peut être prédéfinie ou quelconque. Il ne transmet pas de flux vidéo.

Dans le mode de réalisation décrit ici, le procédé d'immersion comporte un processus P_{CAP} pour obtenir (étape E10) la position courante POS_{HD} et l'orientation courante OR_{HD} de la tête de l'utilisateur USR dans le repère REP_{CAP} lié au réseau de capteurs.

Dans le mode de réalisation décrit ici, le procédé d'immersion P_{IMM} comporte un processus P_{AVT} pour contrôler la position POS_{AVT} et l'orientation OR_{AVT} des yeux de l'avatar AVT dans le repère REP_{EVV} lié au volume virtuel W. Ce processus P_{AVT} est appelé processus de contrôle de l'avatar AVT.

Dans le mode de réalisation décrit ici, lorsque le casque de réalité virtuelle est allumé (étape E05), le processus P_{AVT} de contrôle de l'avatar positionne et oriente les yeux de l'avatar AVT à une position d'origine POS_{AVT, ORIG} et selon une orientation d'origine OR_{AVT, ORIG} prédéterminées (étape E15), en dehors du volume virtuel W.

Puis, au cours d'une étape générale E20, le processus P_{AVT} de contrôle de l'avatar contrôle la position POS_{AVT} et l'orientation OR_{AVT} des yeux de l'avatar AVT dans le repère REP_{EVV} en fonction de la position POS_{HD} et de l'orientation OR_{HD} de la tête de l'utilisateur USR dans le repère REP_{CAP}.

Dans le mode de réalisation décrit ici, le procédé d'immersion P_{IMM} comporte un processus P_{VID} de contrôle du flux vidéo du système d'acquisition vidéo CAM. Ce processus P_{VID} est appelé processus de contrôle vidéo.

Dans le mode de réalisation décrit ici, le processus P_{VID} de contrôle vidéo comporte une étape pour déterminer si la position courante des yeux de l'avatar POS_{AVT} se situe dans le volume virtuel W. Si tel est le cas le processus P_{VID} de contrôle de vidéo envoie (étape E40) un message de contrôle POS au système d'acquisition vidéo CAM pour que celui-ci envoie au casque de réalité virtuelle le flux vidéo acquis par la caméra CAM.

Dans le mode de réalisation décrit ici, le processus P_{VID} de contrôle vidéo envoie (étape E45) un message de contrôle POS au système d'acquisition vidéo CAM pour que celui-ci arrête d'envoyer le flux vidéo acquis par la caméra CAM au casque de réalité virtuelle lorsque les yeux de l'avatar POS_{AVT} sortent et s'éloignent d'une distance déterminée de la limite du volume virtuel W.

Dans le mode de réalisation décrit ici, le procédé d'immersion P_{IMM} comporte un processus P_{CAM} de contrôle de la position du système d'acquisition vidéo CAM. Ce processus P_{CAM} est appelé processus de contrôle de caméra.

Dans le mode de réalisation décrit ici, lorsque le casque de réalité virtuelle est allumé (étape E05), le processus P_{VID} de contrôle vidéo envoie (étape E25) un message de contrôle POS au système d'acquisition vidéo CAM pour que le bras robotisé positionne et oriente ce système CAM selon une position d'origine POS_{CAM, ORIG} et selon une orientation d'origine OR_{CAM, ORIG} déterminées dans un repère REP_{CAM} lié à au système d'acquisition vidéo.

Dans le mode de réalisation décrit ici, le processus P_{CAM} de contrôle de caméra comporte une étape pour déterminer si la position courante des yeux de l'avatar POS_{AVT} est proche et à l'extérieur du volume virtuel W. Si tel est le cas le processus P_{CAM} de contrôle de caméra envoie (étape E30) un message de contrôle POS au système d'acquisition vidéo CAM pour l'allumer et que le bras robotisé le place à la limite du volume VOL_{CAM} selon une position et une orientation correspondantes à celle des yeux de l'avatar AVT. Par exemple si l'avatar AVT se trouve à l'extérieur et à proximité d'une limite Nord du volume virtuel W, orienté selon une direction Sud-Ouest, le système d'acquisition vidéo est positionné à la limite Nord du volume VOL_{CAM} et orienté selon la direction Sud-Ouest.

En variante, le processus P_{CAM} de contrôle de caméra envoie (étape E30) un message de contrôle POS au système d'acquisition vidéo CAM pour qu'il se place à la limite du volume VOL_{CAM} selon une position et une orientation prédéterminées.

Dans le mode de réalisation décrit ici, le processus P_{CAM} de contrôle de caméra comporte une étape pour déterminer si la position courante des yeux de l'avatar POS_{AVT} se situe dans le volume virtuel W. Si tel est le cas le processus P_{CAM} de contrôle de caméra envoie (étape E35) un message de contrôle au système d'acquisition vidéo CAM pour que le bras robotisé modifie sa position POS_{CAM} et son orientation OR_{CAM} dans le repère R_{CAM} en fonction de la position POS_{AVT} et de l'orientation OR_{AVT} des yeux de l'avatar dans le repère REP_{EVV}.

Tant que les yeux de l'avatar AVT se situent dans le volume virtuel W, le bras robotisé adapte la position et l'orientation du système d'acquisition vidéo CAM en fonction des informations reçues.

Si les yeux de l'avatar AVT sortent et s'éloignent du volume virtuel d'une distance déterminée, le processus P_{CAM} de contrôle caméra éteint le système d'acquisition vidéo CAM et met fin à la communication établie avec ce système CAM.

Dans le mode de réalisation décrit ici, le procédé d'immersion P_{IMM} comporte un processus P_{AFF} de restitution d'un contenu sur l'écran SCR du casque de réalité virtuelle. Ce processus P_{AFF} est appelé processus de restitution.

Dans le mode de réalisation décrit ici, le processus P_{AFF} de restitution comporte une étape pour déterminer si la position courante des yeux de l'avatar POS_{AVT} est éloignée du volume virtuel W. Si tel est le cas le processus P_{AFF} de restitution affiche (étape E50) la scène synthétique SS.

Dans le mode de réalisation décrit ici, le processus P_{AFF} de restitution comporte une étape pour déterminer si la position courante des yeux de l'avatar POS_{AVT} est dans le volume virtuel W et relativement éloignée de la limite de ce volume. Si tel est le cas le processus P_{AFF} de restitution affiche (étape E55) le flux vidéo reçu du système d'acquisition vidéo.

De façon connue, si le système d'acquisition vidéo est constitué de deux caméras, chaque oeil reçoit le flux de la caméra correspondante.

Dans le mode de réalisation décrit ici, si la position courante des yeux de l'avatar POS_{AVT} est à l'extérieur ou à l'intérieur du volume virtuel VV et proche de la limite de ce volume, cas le processus P_{AFF} de restitution affiche (étape E60) un contenu de transition entre le flux vidéo reçu du système d'acquisition vidéo et la représentation du volume virtuel W, par exemple sur tout l'écran SCR.

Ce contenu de transition peut par exemple être une image synthétique d'attente de la couleur du volume virtuel W ou un fondu de la scène synthétique SS et du flux vidéo reçu du système d'acquisition CAM.

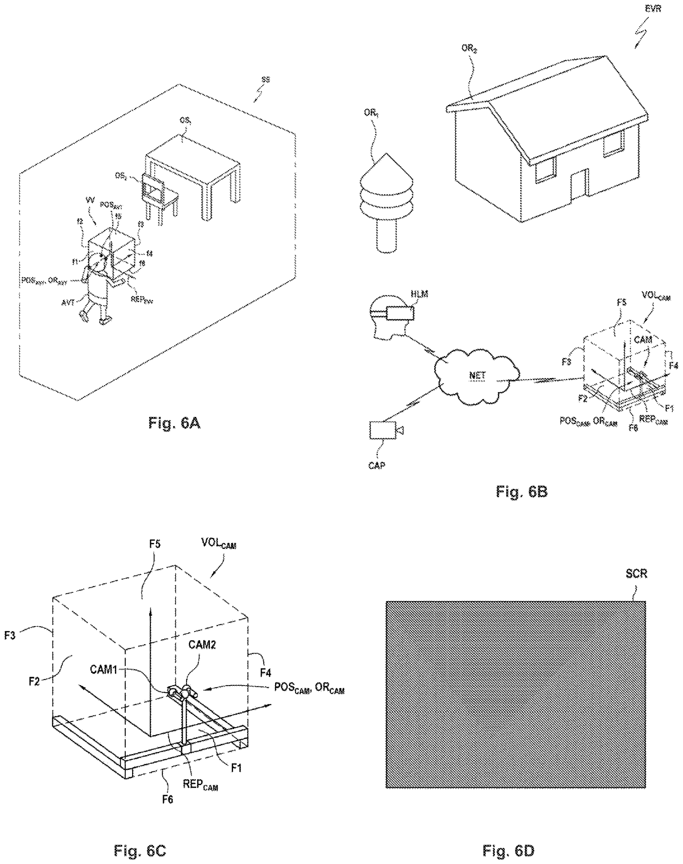

La **figure 6A** représente l'avatar AVT dans une situation dans laquelle ses yeux se trouvent au niveau de la face f1 du volume virtuel EW sensiblement en son milieu. L'avatar AVT est orienté perpendiculairement à cette face, autrement dit il se dirige vers la face f3.

Par conséquent, et comme représenté aux **figures 6B et 6C****,** le système d'acquisition vidéo CAM est positionné au centre de la face F1 du volume VOL_{CAM}, orienté vers la face F3.

La **figure 6D** représente le contenu de transition projeté sur l'écran SCR du casque de réalité virtuel HLM. Dans cet exemple il s'agit d'une image synthétique d'attente de la couleur du volume virtuel W.

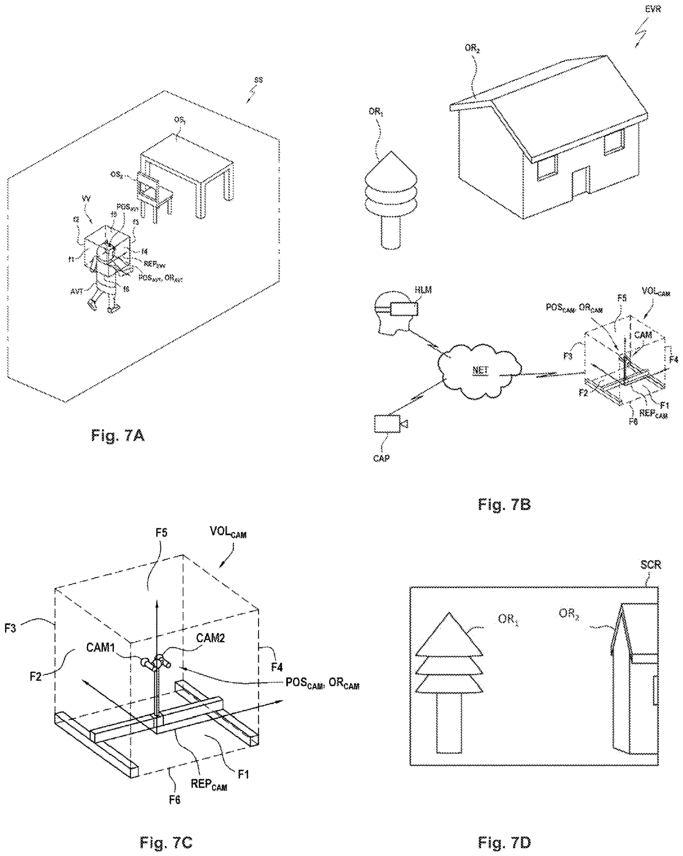

La **figure 7A** représente l'avatar AVT dans une situation dans laquelle ses yeux se trouvent au centre du volume virtuel EW sensiblement en son milieu. L'avatar AVT est orienté vers la face f3.

Par conséquent, et comme représenté aux **figures 7B et 7C****,** le système d'acquisition vidéo CAM est positionné au centre de la face F1 du volume VOL_{CAM}, orienté vers la face F3.

La **figure 7D** représente le contenu projeté sur l'écran SCR du casque de réalité virtuel HLM. Il s'agit du flux vidéo acquis par le système d'acquisition vidéo CAM. On reconnaît l'objet réel OR₁ et une partie de l'objet réel OR₂.

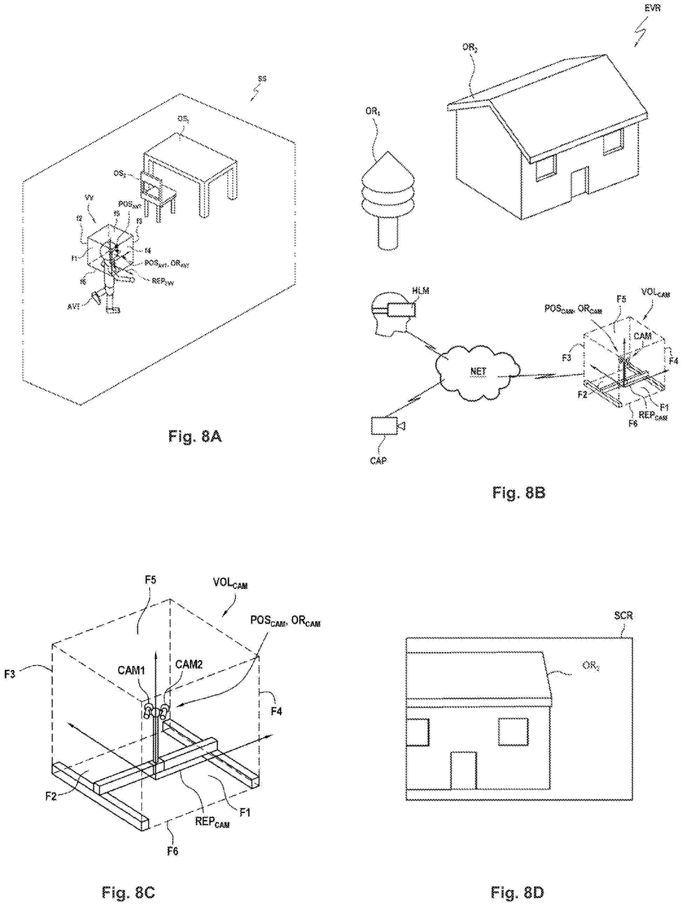

La **figure 8A** représente l'avatar AVT dans une situation dans laquelle il tourne la tête vers l'arête définie par les faces f3 et f4.

Par conséquent, et comme représenté aux **figures 8B et 8C****,** le système d'acquisition vidéo CAM est orienté vers l'arête définie par les faces F3 et F4.

La **figure 8D** représente le contenu projeté sur l'écran SCR du casque de réalité virtuel HLM. Il s'agit du flux vidéo acquis par le système d'acquisition vidéo CAM. On reconnaît une partie de l'objet réel OR₂.

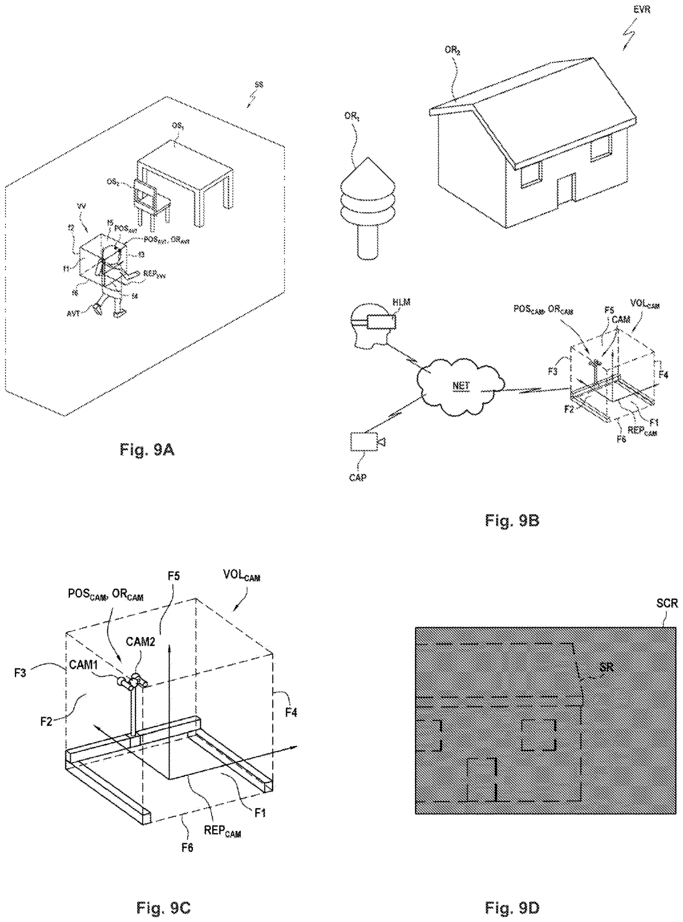

La **figure 9A** représente l'avatar AVT dans une situation dans laquelle ses yeux se trouvent au niveau de la face f3 du volume virtuel EW sensiblement en son milieu. L'avatar AVT est orienté perpendiculairement à cette face.

Par conséquent, et comme représenté aux **figures 9B et 9C****,** le système d'acquisition vidéo CAM est positionné au centre de la face F3 du volume VOL_{CAM}, orienté perpendiculairement à la face F3 et tourné vers l'extérieur de ce volume.

La **figure 9D** représente le contenu de transition projeté sur l'écran SCR du casque de réalité virtuel HLM. Dans cet exemple il s'agit d'un fondu entre le flux vidéo du système d'acquisition CAL et une image synthétique d'attente de la couleur du volume virtuel W.

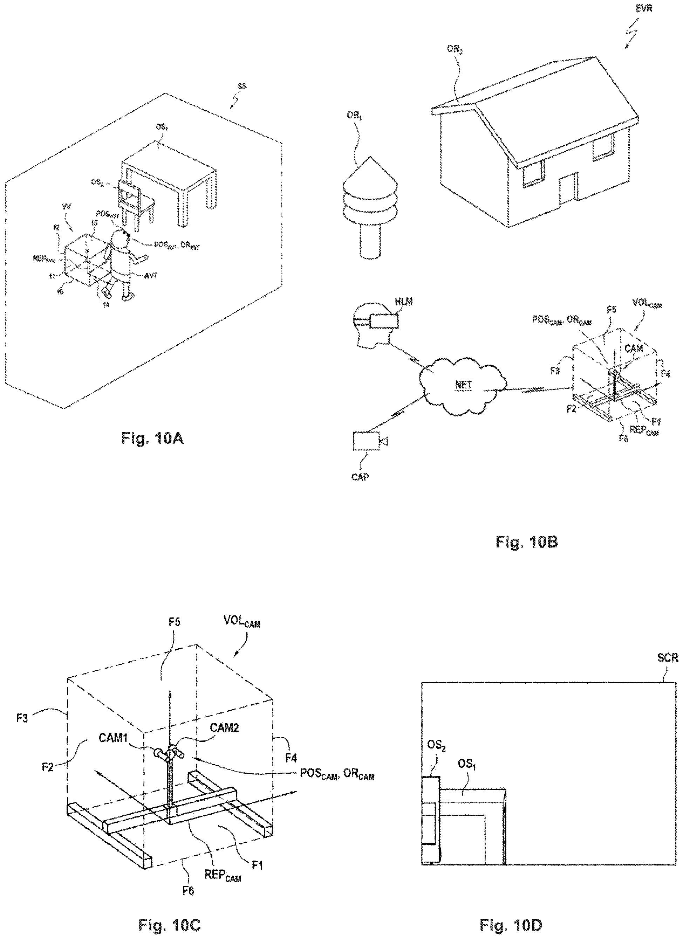

La **figure 10A** représente l'avatar AVT en dehors du volume virtuel W.

Dans le mode de réalisation décrit ici, et comme représenté aux **figures 10B et 10C****,** le système d'acquisition vidéo CAM est positionné dans une position neutre, sensiblement au centre du volume VOL_{CAM}.

La **figure 10D** représente le contenu projeté sur l'écran SCR du casque de réalité virtuel HLM. Il s'agit de la scène synthétique SS vue des yeux de l'avatar AVT. On reconnaît une partie des objets synthétiques OS₁ et OS₂.

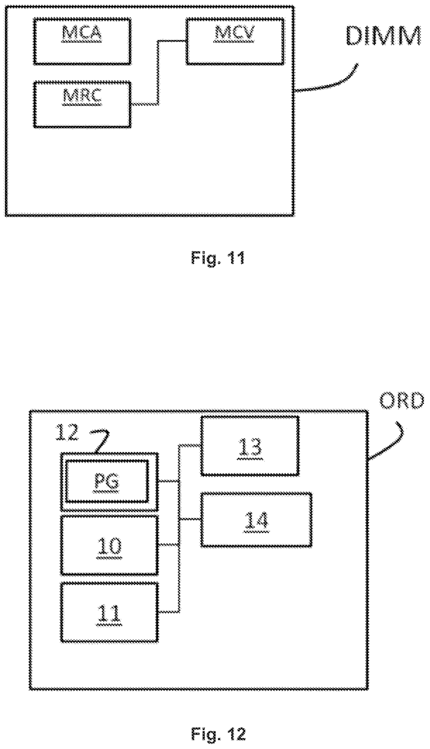

La **figure 11** représente l'architecture fonctionnelle d'un dispositif d'immersion DIMM d'un utilisateur dans une application de réalité virtuelle, conformément à un mode particulier de réalisation.

Ce dispositif comporte :
- un module MCA de contrôle du déplacement d'un avatar AVT d'un utilisateur dans une scène synthétique ;
- un module MCV de contrôle des déplacements d'un système d'acquisition vidéo en fonction des déplacements détectés de la tête dudit utilisateur ; et
- un module MRC de restitution d'un contenu sur un écran SCR d'un casque de réalité virtuelle de l'utilisateur USR, ledit contenu étant un flux vidéo acquis par ledit système d'acquisition vidéo si la position des yeux de l'avatar est dans un objet synthétique dont le volume peut être compris dans un volume dans lequel ledit système d'acquisition vidéo est susceptible de se déplacer.

Ce dispositif DIMM peut avoir l'architecture matérielle d'un ordinateur tel que représenté à la **figure 12****.**

Cet ordinateur ORD comporte notamment un processeur 10, une mémoire vive de type RAM 11, une mémoire morte de type ROM 12, une mémoire non volatile réinscriptible de type Flash 14 et des moyens de communication 13.

La mémoire morte 12 constitue un support conforme à un mode particulier de réalisation de l'invention. Cette mémoire comporte un programme d'ordinateur PG conforme à un mode particulier de réalisation de l'invention, qui lorsqu'il est exécuté par le processeur 10, met en oeuvre un procédé d'immersion conforme à l'invention et décrit précédemment en référence à la figure 4.

## Revendications

1. Procédé d'immersion d'un utilisateur (USR) dans une application de réalité virtuelle, ce procédé comportant :
- une étape (E10) de détection de la position (POS_{HD}) et de l'orientation (OR_{HD}) de la tête de l'utilisateur ;
- une étape (E15, E20) de contrôle du déplacement d'un avatar (AVT) de l'utilisateur dans une scène synthétique (SS) et comprenant le contrôle de la position (POS_{AVT}) et de l'orientation (OR_{AVT}) des yeux de l'avatar en fonction de la position (POS_{HD}) et de l'orientation (OR_{HD}) détectés de la tête de l'utilisateur ;
- une étape (E35) de contrôle des déplacements d'un système d'acquisition vidéo (CAM) en fonction de la position (POS_{AVT}) et de l'orientation (OR_{AVT}) des yeux de l'avatar ; et
- une étape (E55) de restitution d'un contenu sur un écran (SCR) d'un casque (HLM) de réalité virtuelle de l'utilisateur (USR), ledit contenu étant un flux vidéo acquis par ledit système d'acquisition vidéo si la position des yeux de l'avatar (AVT) est dans un objet synthétique (VV) dont le volume est apte à être compris dans un volume (VOL_{CAM}) dans lequel ledit système d'acquisition vidéo (CAM) est susceptible de se déplacer.

2. Procédé d'immersion d'un utilisateur (USR) selon la revendication 1 dans lequel le contenu restitué (E50) sur ledit écran (SCR) est la scène synthétique (SS) si la position des yeux de l'avatar (AVT) est en dehors de l'objet synthétique (W).

3. Procédé d'immersion d'un utilisateur (USR) selon la revendication 1 ou 2 dans lequel le contenu restitué (E60) est un contenu de transition (TRS) entre le flux vidéo acquis par ledit système (CAM) et la scène synthétique (SS) si la position des yeux de l'avatar (AVT) est proche de la limite de l'objet synthétique (W).

4. Procédé d'immersion d'un utilisateur (USR) selon la revendication 3 dans lequel le contenu de transition (TRS) est une image synthétique de la couleur dudit objet synthétique (VV).

5. Procédé d'immersion d'un utilisateur (USR) selon la revendication 3 dans lequel le contenu de transition (TRS) est un fondu entre le flux vidéo acquis par ledit système d'acquisition vidéo (CAM) et la scène synthétique (SS).

6. Dispositif d'immersion (DIMM) d'un utilisateur (USR) dans une application de réalité virtuelle, ce dispositif comportant :
- des moyens (10, 11, 12, 13, 14) d'obtention (E10) de la position (POS_{HD}) et de l'orientation (OR_{HD}) de la tête de l'utilisateur ;
- un module (MCA) de contrôle du déplacement d'un avatar (AVT) de l' utilisateur dans une scène synthétique (SS) configuré pour le contrôle de la position (POS_{AVT}) et de l'orientation (OR_{AVT}) des yeux de l'avatar en fonction de la position (POS_{HD}) et de l'orientation (OR_{HD}) de la tête de l'utilisateur;
- un module (MCV) de contrôle des déplacements d'un système d'acquisition vidéo (CAM) en fonction de la position (POS_{AVT}) et de l'orientation (OR_{AVT}) des yeux de l'avatar ; et
- un module (MRC) de restitution d'un contenu sur un écran (SCR) d'un casque (HLM) de réalité virtuelle de l'utilisateur (USR), ledit contenu étant un flux vidéo acquis par ledit système d'acquisition vidéo (CAM) si la position des yeux de l'avatar (AVT) est dans un objet synthétique (W) dont le volume est apte à être compris dans un volume (VOL_{CAM}) dans lequel ledit système d'acquisition vidéo (CAM) est susceptible de se déplacer.

7. Système (SYS) comportant un dispositif d'immersion selon la revendication 6, des capteurs (CAP) pour détecter les déplacements de la tête d'un utilisateur (USR), ledit système d'acquisition vidéo (CAM) et ledit casque de réalité virtuelle.

8. Système (SYS) selon la revendication 7 dans lequel ledit système d'acquisition vidéo (CAM) comporte deux caméras.

9. Programme d'ordinateur (PG) comportant des instructions configurées pour mettre en oeuvre les étapes d'un procédé d'immersion selon l'une quelconque des revendications 1 à 5 lorsqu'elles sont exécutées par un ordinateur (ORD).

## Patentansprüche

1. Verfahren zum Eintauchen eines Benutzers (USR) in eine Anwendung der virtuellen Realität, wobei dieses Verfahren umfasst:
- einen Schritt (E10) des Detektierens der Position (POS_{HD}) und der Ausrichtung (OR_{HD}) des Kopfs des Benutzers;
- einen Schritt (E15, E20) des Kontrollierens der Bewegung eines Avatars (AVT) des Benutzers in einer synthetischen Szene (SS) und umfassend das Kontrollieren der Position (POS_{AVT}) und der Ausrichtung (OR_{AVT}) der Augen des Avatars in Abhängigkeit von der detektierten Position (POS_{HD}) und von der detektierten Ausrichtung (OR_{HD}) des Kopfs des Benutzers;
- einen Schritt (E35) des Kontrollierens der Bewegungen eines Videoerfassungssystems (CAM) in Abhängigkeit von der Position (POS_{AVT}) und von der Ausrichtung (OR_{AVT}) der Augen des Avatars; und
- einen Schritt (E55) des Wiedergebens eines Inhalts auf einem Bildschirm (SCR) eines Virtuelle-Realität-Headsets (HLM) des Benutzers (USR), wobei der Inhalt ein Videostream ist, der von dem Videoerfassungssystem erfasst wird, wenn die Position der Augen des Avatars (AVT) in einem synthetischen Gegenstand (W) ist, dessen Volumen geeignet ist, in einem Volumen (VOL_{CAM}) enthalten zu sein, in dem sich das Videoerfassungssystem (CAM) bewegen kann.

2. Verfahren zum Eintauchen eines Benutzers (USR) nach Anspruch 1, wobei der auf dem Bildschirm (SCR) wiedergegebene (E50) Inhalt die synthetische Szene (SS) ist, wenn die Position der Augen des Avatars (AVT) außerhalb des synthetischen Gegenstands (W) ist.

3. Verfahren zum Eintauchen eines Benutzers (USR) nach Anspruch 1 oder 2, wobei der wiedergegebene (E60) Inhalt ein Transitionsinhalt (TRS) zwischen dem von dem System (CAM) erfassten Videostream und der synthetischen Szene (SS) ist, wenn die Position der Augen des Avatars (AVT) nahe der Grenze des synthetischen Gegenstands (W) ist.

4. Verfahren zum Eintauchen eines Benutzers (USR) nach Anspruch 3, wobei der Transitionsinhalt (TRS) ein synthetisches Bild der Farbe des synthetischen Gegenstands (W) ist.

5. Verfahren zum Eintauchen eines Benutzers (USR) nach Anspruch 3, wobei der Transitionsinhalt (TRS) eine Verschmelzung zwischen dem von dem Videoerfassungssystem (CAM) erfassten Videostream und der synthetischen Szene (SS) ist.

6. Vorrichtung zum Eintauchen (DIMM) eines Benutzers (USR) in eine Anwendung der virtuellen Realität, wobei diese Vorrichtung umfasst:
- Mittel (10, 11, 12, 13, 14) zum Erhalten (E10) der Position (POS_{HD}) und der Ausrichtung (OR_{HD}) des Kopfs des Benutzers;
- ein Modul (MCA) zum Kontrollieren der Bewegung eines Avatars (AVT) des Benutzers in einer synthetischen Szene (SS), das zum Kontrollieren der Position (POS_{AVT}) und der Ausrichtung (OR_{AVT}) der Augen des Avatars in Abhängigkeit von der Position (POS_{HD}) und von der Ausrichtung (OR_{HD}) des Kopfs des Benutzers ausgestaltet ist;
- ein Modul (MCV) zum Kontrollieren der Bewegungen eines Videoerfassungssystems (CAM) in Abhängigkeit von der Position (POS_{AVT}) und von der Ausrichtung (OR_{AVT}) der Augen des Avatars; und
- ein Modul (MRC) zum Wiedergeben eines Inhalts auf einem Bildschirm (SCR) eines Virtuelle-Realität-Headsets (HLM) des Benutzers (USR), wobei der Inhalt ein Videostream ist, der von dem Videoerfassungssystem CAM) erfasst wird, wenn die Position der Augen des Avatars (AVT) in einem synthetischen Gegenstand (W) ist, dessen Volumen geeignet ist, in einem Volumen (VOL_{CAM}) enthalten zu sein, in dem sich das Videoerfassungssystem (CAM) bewegen kann.

7. System (SYS), umfassend eine Vorrichtung zum Eintauchen nach Anspruch 6, Sensoren (CAP) zum Detektieren der Bewegungen des Kopfs eines Benutzers (USR), das Videoerfassungssystem (CAM) und das Virtuelle-Realität-Headset.

8. System (SYS) nach Anspruch 7, wobei das Videoerfassungssystem (CAM) zwei Kameras umfasst.

9. Computerprogramm (PG), das Anweisungen umfasst, die dazu ausgestaltet sind, die Schritte eines Verfahrens zum Eintauchen nach einem der Ansprüche 1 bis 5 durchzuführen, wenn sie von einem Computer (ORD) ausgeführt werden.

## Claims

1. Method for immersing a user (USR) in a virtual reality application, this method comprising:
- a step (E10) of detecting the position (POS_{HD}) and the orientation (OR_{HD}) of the head of the user;
- a step (E15, E20) of monitoring the displacement of an avatar (AVT) of the user in a synthetic scene (SS) and comprising monitoring the position (POS_{AVT}) and the orientation (OR_{AVT}) of the eyes of the avatar on the basis of the detected position (POS_{HD}) and orientation (OR_{HD}) of the head of the user;
- a step (E35) of monitoring the displacements of a video acquisition system (CAM) on the basis of the position (POS_{AVT}) and the orientation (OR_{AVT}) of the eyes of the avatar; and
- a step (E55) of rendering a content on a screen (SCR) of a virtual reality helmet (HLM) of the user (USR), said content being a video stream acquired by said video acquisition system if the position of the eyes of the avatar (AVT) is in a synthetic object (W) the volume of which is able to be within a volume (VOL_{CAM}) in which said video acquisition system (CAM) is capable of moving.

2. Method for immersing a user (USR) according to Claim 1, wherein the content rendered (E50) on said screen (SCR) is the synthetic scene (SS) if the position of the eyes of the avatar (AVT) is outside the synthetic object (VV).

3. Method for immersing a user (USR) according to Claim 1 or 2, wherein the rendered content (E60) is a transition content (TRS) for transitioning between the video stream acquired by said system (CAM) and the synthetic scene (SS) if the position of the eyes of the avatar (AVT) is close to the boundary of the synthetic object (VV).

4. Method for immersing a user (USR) according to Claim 3, wherein the transition content (TRS) is a synthetic image of the colour of said synthetic object (W) .

5. Method for immersing a user (USR) according to Claim 3, wherein the transition content (TRS) is a fade between the video stream acquired by said video acquisition system (CAM) and the synthetic scene (SS).

6. Immersion device (DIMM) for immersing a user (USR) in a virtual reality application, this device comprising:
- means (10, 11, 12, 13, 14) for obtaining (E10) the position (POS_{HD}) and the orientation (OR_{HD}) of the head of the user;
- a module (MCA) for monitoring the displacement of an avatar (AVT) of the user in a synthetic scene (SS), configured to monitor the position (POS_{AVT}) and the orientation (OR_{AVT}) of the eyes of the avatar on the basis of the position (POS_{HD}) and orientation (OR_{HD}) of the head of the user;
- a module (MCV) for monitoring the displacements of a video acquisition system (CAM) on the basis of the position (POS_{AVT}) and the orientation (OR_{AVT}) of the eyes of the avatar; and
- a module (MRC) for rendering a content on a screen (SCR) of a virtual reality helmet (HLM) of the user (USR), said content being a video stream acquired by said video acquisition system (CAM) if the position of the eyes of the avatar (AVT) is in a synthetic object (W) the volume of which is able to be within a volume (VOL_{CAM}) in which said video acquisition system (CAM) is capable of moving.

7. System (SYS) comprising an immersion device according to Claim 6, sensors (CAP) for detecting displacements of the head of a user (USR), said video acquisition system (CAM) and said virtual reality helmet.

8. System (SYS) according to Claim 7, wherein said video acquisition system (CAM) comprises two cameras.

9. Computer program (PG) comprising instructions configured to implement the steps of an immersion method according to any one of Claims 1 to 5 when they are executed by a computer (ORD).
